# EUROPÄISCHE PATENTSCHRIFT

(11) **EP 1 114 344 B1**
(45) Veröffentlichungstag und Bekanntmachung des Hinweises auf die Patenterteilung: **22.11.2006**
(21) Anmeldenummer: 99955744.0
(22) Anmeldetag: 17.09.1999
(51) Int. Cl.: G02B 6/28, H04B 10/20, H04M 1/02

(54) **BUSSYSTEM ZUM ÜBERTRAGEN VON OPTISCHEN SIGNALEN**
BUS SYSTEM FOR TRANSMITTING OPTICAL SIGNALS
SYSTEME DE BUS POUR LA TRANSMISSION DE SIGNAUX OPTIQUES

(30) Priorität: 18.09.1998 DE 19842815
(43) Veröffentlichungstag der Anmeldung: 11.07.2001
(73) Patentinhaber: SIEMENS AKTIENGESELLSCHAFT, 80333 München (DE)
(72) Erfinder: KRÜGER, Werner, D-81477 München (DE)
(86) Internationale Anmeldenummer: PCT/DE1999/002995
(87) Internationale Veröffentlichungsnummer: WO 2000/017687

(56) Entgegenhaltungen:
- EP-A- 0 237 237
- EP-A- 0 249 746
- EP-A- 0 266 934
- EP-A- 0 366 974
- US-A- 4 575 180
- US-A- 5 193 132
- US-A- 5 237 607

## Beschreibung

Optische Bussysteme dienen der Kommunikation zwischen optoelektronischen Baugruppen und werden herkömmlicherweise aus einem Bündel von parallel zueinander angeordneten Lichtleitern bzw. Lichtleiterfasern gebildet. Die Ein- und/oder Auskopplung der von den Baugruppen zu sendenden bzw. zu empfangenden optischen Signale erfolgt dabei an einer am Anfang bzw. Ende des Bündels von Lichtleiter gebildeten Schnittstelle. Im Normalfall stellt ein Bündel von Lichtleitern die Verbindung zwischen zwei Baugruppen her, die jeweils an einem Ende davon angeordnet sind. Sind an einem Ende des Bündels von Lichtleitern jedoch mehrere Baugruppen anzuordnen, ist das Bündel an dem Ende in eine entsprechende Anzahl von Teilbündeln aufzuspalten. Das Aufspalten des Bündels von Lichtleitern in eine bestimmte Anzahl von Teilbündeln stellt einen aufwendigen Vorgang dar. Da die einzelnen Lichtleiter bzw. - fasern voneinander isoliert sind, d.h. eine Signalübertragung von einem Lichtleiter auf einen anderen nicht erfolgt, ist es nötig, die Baugruppen an den jeweiligen Enden des Bündels bzw. der Teilbündel von Lichtleitern genau zu positionieren. Andernfalls ist eine korrekte Übermittlung von Signalen zwischen den Baugruppen nicht gewährleistet.

Aus der EP 0 249 746 ist lediglich eine einzelne Lichtleitfaser für ein Datenbussystem bekannt, die durch eine koaxial in ihrem Inneren verlaufende, lichtstreuende Ader die Ein- beziehungsweise Auskopplung von Licht durch ihre Mantelschicht an verschiedenen Orten ihrer Längserstreckung ermöglicht.

Mit der Montageanordnung der EP 0 237 237 läßt sich ein einzelner optischer Leiter an einer Halterungsplatte derart in eine bestimmte Position bringen, daß er an mehrere, dort angebrachte Leiterplatinen für unterschiedliche Konfigurationen ankoppelbar ist und dabei leicht zugänglich zum Beispiel durch Austausch oder Umpositionieren für eine andere Leiterplatinenanordnung bleibt. Für die jeweilige vorgegebene Leiterplatinenanordnung ist dabei der optische Leiter dauerhaft in ein- und derselben Position angeordnet.

Aus der EP 0 266 934 ist lediglich ein Herstellungsverfahren für einen Lichtwellenleiter mit speziellem Aufbau und Präparation bekannt.

Die EP 0 366 974 A1 betrifft lediglich eine Halbleiterschaltung, bei der mindestens zwei optische Verbindungsschichten über eine optische Leiterplatte mit mindestens einem Lichtwellenleiter optisch gekoppelt sind. Dabei sind die mindestens zwei Verbindungsschichten und der Lichtwellenleiter der optischen Leiterplatte in einer fest vorgegebenen, d.h. fixen räumlichen Zuordnung angeordnet und in dieser einen vorgegebenen Position dauerhaft miteinander optisch gekoppelt.

Die US 5,237,607 bezieht sich lediglich auf ein Telefon, dessen Tasten durch Lichtwellenleiter beleuchtbar sind.

Der Erfindung liegt die Aufgabe zugrunde, einen Telefonapparat, Telefonhörer oder ein Mobilfunkgerät bereitzustellen, zwischen dessen jeweiligen Baugruppen eine möglichst einwandfreie Übertragung von optischen Signalen ermöglicht ist.

Diese Aufgabe wird mit Hilfe eines Telefonapparats, Telefonhörers oder Mobilfunkgeräts, insbesondere Handys, entsprechend den Merkmalen des Anspruchs 1 gelöst.

Dadurch, dass die optischen Körper des Bussystems derart übereinander angeordnet oder aufeinander geschichtet sind, dass sie relativ zueinander beweglich sind und dabei gleichzeitig in optischem Kontakt zueinander verbleiben, ist stets eine weitgehend einwandfreie Übertragung von optischen Signalen zwischen den beiden Komponenten des Telefonapparats, Telefonhörers oder Mobilfunkgeräts sichergestellt, insbesondere sowohl im Ausschalt- und Standby-Zustand als auch im Einschaltzustand.Da die beiden Komponenten an die relativ zueinander beweglichen, optisch leitfähigen Körper des Bussytems angekoppelt sind, ist es nicht erforderlich, sie elektrisch - wie zum Beispiel durch eine flexible Leiterplatte- miteinadner zu verbinden. Durch die Übereinanderanordnung beziehungsweise Aufeinanderschichtung der optischen Körper lassen sich diese praktisch beliebig oft relativ zueinander bewegen. Verschleiß- beziehungsweise Abnutzungsprobleme wie sie zum Beispiel bei einer elektrischen Verbindung der beiden Komponenten mittels einer flexiblen Leiterplatte auftreten könnten, sind somit weitgehend vermieden. Auf diese Weise ist somit die Gefahr von Beeinträchtigungen oder gar Unterbrechungen der Signalübertragung zwischen den beiden Komponenten weitgehend vermieden. Somit läßt sich also auf einfache Weise eine einwandfreie Übertragung von optischen Signalen, insbesondere von Daten und/oder Energie, zwischen den Komponenten z..B. eines Mobilfunkgeräts weitgehend dauerhaft erreichen.

Weiterhin wird insbesondere ein Bussystem zum Übertragen von optischen Signalen bereitgestellt, welches mindestens einen optisch leitfähigen Körper aufweist. Über vorbestimmte, in einer Mehrzahl vorkommende Schnittstellen werden dem Körper optische Signale von elektrischen Baugruppen zugeführt bzw. entnommen. Die Struktur des optisch leitfähigen Körpers ist in vorteilhafter Weise derart beschaffen, daß ein an einer Schnittstelle eingekoppeltes optisches Signal an jeder anderen Schnittstelle unabhängig von deren Position auskoppelbar ist. Die Zufuhr der optischen Signale durch die elektrischen Baugruppen kann dabei beispielsweise über Lumineszenzdioden, Laserdioden, usw., die Entnahme hingegen zum Beispiel durch Fotodioden, Solarzellen und Fototransistoren oder sonstige optoelektronische Bauelemente erfolgen.

Das Bussytem kann insbesondere als plastischer Körper ausgebildet sein, wenn der jeweilige optisch leitfähige Körper aus einem verformbaren Material hergestellt wird. Dadurch können auch nach Fertigstellung des optisch leitfähigen Körpers in vorteilhafter Weise eine Mehrzahl von Schnittstellen zum Ein- und/oder Auskoppeln von optischen Signalen im Innern des optisch leitfähigen Körpers durch bloßes Hineindrücken von entsprechenden Komponenten in den optisch leitfähigen Körper gebildet werden. Wird demgegenüber der optisch leitfähige Körper aus einem nichtverformbaren Material gebildet, so wird insbesondere ein Bussystem mit fester Form geschaffen, welches in vorteilhafter Weise gegenüber einer mechanischen Beanspruchung eine hinreichende Widerstandskraft besitzt.

Weiterhin können in vorteilhafter Weise Übertragungsverluste innerhalb des Bussystems dadurch minimiert werden, daß der jeweilige optisch leitfähige Körper zweckmäßigerweise aus einem Material gebildet wird, welches Licht gerichtet leitet.

Somit können in vorteilhafter Weise selbst energiearme Signale übertragen werden. Wird dagegen gemäß einer weiteren Weiterbildung der optisch leitfähige Körper aus einem Material hergestellt, welches Licht ungerichtet leitet, so können die Schnittstellen, über welche dem Bussystem optische Signale zugeführt bzw. entnommen werden, willkürlich gewählt werden.

Der optisch leitfähige Körper kann desweiteren vorzugsweise aus einem Material gebildet sein, welches Licht, insbesondere im Infrarotbereich, im sichtbaren Bereich oder im Ultraviolettbereich leitet. Geeignete Materialien sind insbesondere Kunststoffe wie Plexiglas, PVC, Acryl, ferner Glas sowie lichtdurchlässige Flüssigkeiten.

Schnittstellen zum Ein- und/oder Auskoppeln von optischen Signalen lassen sich insbesondere beispielsweise auf einfache Weise dadurch bilden, daß die Fotoelemente der jeweiligen Baugruppen entweder im Inneren des optisch leitfähigen Körpers angeordnet und von ihm umschlossen werden oder die äußere Oberfläche des optisch leitfähigen Körpers, an der die Fotoelemente angebracht werden, für einen Ein- oder Auslaß von Licht beispielsweise durch Ausbildung einer Oberflächenstruktur, die eine partielle Ein- und/oder Auskopplung von Licht erlaubt, geeignet präpariert wird.

Der optische Kontakt zwischen zwei optisch leitfähigen Körpern kann insbesondere auf einfache Weise dadurch hergestellt werden, daß die Körper derart aufeinander geschichtet bzw. übereinander angeordnet werden, daß sich Oberflächenbereiche der Körper überlappen. Die Oberflächenbereiche, die wiederum für einen Ein- und Austritt von Licht geeignet präpariert sind, können sich dabei entweder berühren oder in einem festzulegenden Abstand gegenüberstehen. Da zwischen den Körpern keine feste Verbindung besteht, können sie gegeneinander verschoben bzw. verdreht werden.

Werden die zwei Komponenten gemäß einer anderen Weiterbildung jeweils innerhalb eines optisch leitfähigen Körpers angeordnet, wird in vorteilhafter Weise eine kompakte elektrische Vorrichtung geschaffen, deren Kontur willkürlich gestaltet werden kann.

Das erfindungsgemäße Bussystem läßt sich vorteilhaft in einer elektrischen Vorrichtung verwenden, bei welcher die erste Komponente eine Signaleingabeeinrichtung und die zweite Komponente eine Signalausgabeeinrichtung aufweisen. Beispielsweise läßt sich auf einfache Weise ein Telefonapparat, insbesondere ein Handy, oder ein Telefonhörer bilden, wobei die erste Komponente eine Tastatur und ein Mikrofon beinhaltet und in dem ersten optisch leitfähigen Körper angeordnet ist und die zweite Komponente ein Display und eine Hörkapsel beinhaltet und in dem zweiten optisch leitfähigen Körper angeordnet ist.

Des weiteren läßt vorteilhaft eine beliebige.Anzahl weiterer optisch-leitfähiger Körper an das erfindungsgemäße Bussystem koppeln, wobei jeder der optisch leitfähigen Körper ein oder mehrere lichtemittierende und/oder lichtempfangende Elemente aufweisen kann. Damit läßt sich ein beliebig großes bzw. leistungsfähiges Bussystem erzeugen.

Im folgenden wird das erfindungsgemäße Bussystem in einer konkreten Ausführungsform beschrieben.

Entsprechend der Ausführungsform wird das Bussystem in Verbindung mit einem mobilen drahtlosen Kommunikationssystem, beispielsweise einem Mobilfunkgerät nach dem GSM-Standard, dargestellt.

Gebildet wird das Bussytem dabei durch beispielsweise zwei quaderförmig gestaltete Körper, die aus einem optisch leitfähigen Material wie Acryl gegossen sind und die Unter- und Oberschale, d.h. das Gehäuse, des Mobilfunkgeräts bilden. Insbesondere wird ein Material gewählt, welches selektiv für Infrarotlicht transparent ist und Licht ungerichtet leitet.

In die Oberschale ist eine erste Komponente eingegossen, die unter anderem einen über den Bus zu speisenden ersten Energiespeicher, eine Tastatur, ein Mikrofon, eine erste Steuerschaltung und als optoelektronische Bauelemente (Koppelelemente) eine Lumineszenzdiode sowie eine Fotodiode aufweist. Demgegenüber ist eine zweite Komponente in die Unterschale eingegossen und weist unter anderem einen zweiten, von außen zu speisenden Energiespeicher, eine Flüssigkristallanzeige, eine Hörkapsel, eine zweite Steuerschaltung und wiederum als optoelektronische Bauelemente eine Lumineszenzdiode sowie eine Fotodiode auf. Die Bauelemente der ersten und zweiten Komponenten sind in geeigneter Weise miteiander elektrisch verbunden, während die optoelektronischen Bauelemente sich jeweils mit der Ober- bzw. Unterschale in optischem Kontakt befinden. Die jeweiligen Komponenten sowie deren optoelektronische Bauelemente können innerhalb der Ober- und Unterschale willkürlich angeordnet werden.

Die Ober- und Unterschale des Mobilfunkgeräts sind direkt aufeinander geschichtet, wobei die gegenüberliegenden Seiten einander angepaßt sind, und lediglich durch eine Führungseinrichtung miteinander verbunden, welche eine relative Verschiebung der Unterschale bezüglich der Oberschale in Längsrichtung gestattet. Im Ausschalt- sowie im Standbyzustand des Mobilfunkgeräts überlappen sich die direkt gegenüberliegenden Seiten der Ober- und Unterschale vollständig, während sie sich im Einschaltzustand teilweise überlappen. Die Ober- und Unterschale befinden sich sowohl Ausschalt- und Standbyzustand als auch im Einschaltzustand in optischem Kontakt zueinander. Damit der optische Kontakt auch im Einschaltzustand aufrechterhalten wird, bei welchem sich die direkt gegenüberliegenden Seiten der Ober- und Unterschale lediglich teilweise überlappen, sind die sich überlappenden Bereiche durch Ausbildung einer geeigneten Oberflächenstruktur beispielsweise durch Polieren derart ausgebildet, daß Licht von der Oberschale in die Unterschale und umgekehrt nahezu ungehindert gelangen kann.

Die Übertragung von Signalen zwischen den jeweiligen Komponenten über das Bussystem erfolgt dadurch, daß die erste Komponente elektrische Signale durch ein optoelektronisches Bauelement in optische Signale umwandelt, die über eine Schnittstelle einem ersten optisch leitfähigen Körper des Bussystems zugeführt werden. Die optischen Signale werden von dem ersten optisch leitfähigen Körper auf einen zweiten optisch leitfähigen Körper übertragen, der sich in einem optischen Kontakt zu dem ersten Körper befindet. Eine zweite Komponente entnimmt bzw. empfängt über eine Schnittstelle des zweiten optisch leitfähigen Körpers die optischen Signale durch ein anderes optoelektronisches Bauelement, welches die optischen Signale in elektrische Signale umwandelt. Eine bidirektionale Übertragung von Signalen wird dadurch ermöglicht, daß die jeweiligen Komponenten sowohl mit einem optoelektronischen Bauelement, das zum Umwandeln von elektrischen Signalen in optische Signale wie eine Lumineszenzdiode geeignet ist, als auch mit einem optoelektronischen Bauelement, das zum Umwandeln von optischen Signalen in elektrische Signale wie eine Fotodiode geeignet ist, ausgestattet ist. Da die Oberschale und Unterschale nicht elektrisch beispielsweise durch eine flexible Leiterplatte miteinander verbunden sind, können sie beliebig oft relativ zueinander bewegt werden, ohne daß die Gefahr der Beschädigung der elektrischen Verbindung besteht.

Die Art der relativen Bewegung der Ober- und Unterschale zueinander, d.h. ein Verschieben, Verdrehen oder Klappen der Ober- und Unterschale zueinander, wird dabei durch die Konstruktion der Führungseinrichtung bestimmt.

Die vom Bussystem übertragenen optischen Signale können einerseits Daten, d.h. Informationen, andererseits aber auch Energie darstellen, welche von der jeweiligen Komponente zur Bereitstellung eines Betriebsstroms bzw. einer Betriebsspannung benötigt wird, die nicht von außen über einen elektrischen Leiter zugeführt wird.

Für Komponenten mit sehr geringem Stromverbrauch, kann die Energieversorgung über das Bussystem beispielsweise über eine Solarzelle erfolgen, welche einen Teil der im Bussystem durch die übertragenen optischen Signale befindlichen Energie in einen Betriebsstrom umwandelt. Insbesondere kann die Energieversorgung eines LCD's auf diese Weise erfolgen, dessen Strombedarf lediglich einige Mikroampere beträgt.

Bei Komponenten mit höherem Strombedarf sind spezielle Schaltungsmaßnahmen erforderlich. Beispielsweise könnte bei einer paketweisen Übertragung von Daten in den Übertragungspausen ein Energiespeicher wie ein Kondensator, eine Spule, usw. über das Bussystem mit Energie geladen werden. Die effektive Datenübertragungsrate wird dann u.a. von der für die Sendung der einzelnen Datenpakete zur Verfügung stehenden Energiemenge bestimmt. Der Betrieb einer Tastatur kann auf diese Weise erfolgen.

Die Energieversorgung von akustischen Komponenten wie einem Mikrofon oder einer Hörkapsel erfordert einen relativ hohen Strombedarf, der durch einen Energiespeicher hoher Kapazität wie z.B. einem Akkumulator oder einem Kondensator hoher Kapazität, beispielsweise einem "Gold Cap", bereitgestellt wird.

Bei dieser Ausführungsform erfolgt die Energieversorgung des Mobilfunkgerätes insgesamt und der in der Unterschale befindlichen zweiten Komponente durch den zweiten Energiespeicher, der als Akkumulator ausgebildet ist und von außen über eine Versorgungsleitung gespeist bzw. geladen wird. Die Energieversorung der in der Oberschale befindlichen ersten Komponente, die ein Mikrofon aufweist und damit einen relativ hohen Strombedarf besitzt, erfolgt durch den ersten Energiespeicher, der ebenfalls als Akkumulator oder einem Kondensator hoher Kapazität, beispielsweise einem "Gold Cap" ausgebildet ist, jedoch über das Bussystem gespeist bzw. geladen wird. Alternativ kann die Energieversorgung der ersten Komponente über eine elektrische Leitung erfolgen, die mit dem von außen gespeisten Energiespeicher der zweiten Komponente verbunden ist.

Zum Schutz vor mechanischer Beschädigung und zur Abschirmung von äußeren Störeinflüssen sind die Außenseiten der Ober- und Unterschale des Mobilfunkgeräts mit einer lichtundurchlässigen Beschichtung versehen.

## Patentansprüche

1. Mobilfunkgerät, insbesondere Handy, mit einer ersten Komponente, die an mindestens einen ersten optisch leitfähigen Körper gekoppelt ist und ein oder mehrere lichtemittierende und/oder lichtempfangende Elemente aufweist, und
einer zweiten Komponente, die an mindestens einen zweiten optisch leitfähigen Körper gekoppelt ist und ein oder mehrere lichtemittierende und/oder lichtempfangende Elemente aufweist,
wobei der erste und der zweite optisch leitfähige Körper derart unter Bildung eines Bussystems zum Übertragen von optischen Signalen übereinander angeordnet oder aufeinander geschichtet sind, dass diese relativ zueinander beweglich sind und sich in optischen Kontakt zueinander befinden,
wobei der jeweilige optisch leitfähige Körper des Bussystems eine Mehrzahl von Schnittstellen zum Ein- und/oder Auskoppeln von optischen Signalen aufweist, wobei die Struktur des jeweiligen optisch leitfähigen Körpers derart beschaffen ist, daß ein an einer Schnittstelle eingekoppeltes optisches Signal an jeder anderen Schnittstelle unabhängig von deren Position auskoppelbar ist, wobei die erste Komponente in der Oberschale und die zweite Komponente in der Unterschale des Mobilfunkgeräts vorgesehen ist, und wobei die Ober- und die Unterschale lediglich durch eine Führungseinrichtung miteinander verbunden sind, die eine relative Bewegung der Unterschale bezüglich der Oberschale gestattet.

2. Mobilfunkgerät, insbesondere Handy, nach Anspruch 1,
wobei
die Führungseinrichtung derart ausgebildet ist, dass ein Verschieben, Verdrehen oder Klappen der Ober- und Unterschale zueinander ermöglicht ist.

3. Mobilfunkgerät, insbesondere Handy,nach einem der vorausgehenden Ansprüche,
wobei
das Bussystem durch zwei quaderförmig gestaltete Körper gebildet ist, die aus einem optisch leitfähigen Material gegossen sind und die Unter- und Oberschale des Mobilfunkgeräts bilden.

4. Mobilfunkgerät, insbesondere Handy, nach einem der vorausgehenden Ansprüche,
wobei
die erste Komponente eine Tastatur und ein Mikrofon aufweist.

5. Mobilfunkgerät, insbesondere Handy, nach einem der vorausgehenden Ansprüche,
wobei
die zweite Komponente ein Display und eine Hörkapsel aufweist.

6. Mobilfunkgerät, insbesondere Handy, nach einem der vorausgehenden Ansprüche,
wobei
der erste und der zweite optische Körper derart beweglich aufeinander geschichtet oder übereinander angeordnet sind, dass diese sich im Ausschalt- und Standby-Zustand der Mobilfunkgeräte vollständig sowie in dessen Einschaltzustand teilweise überlappen.

7. Mobilfunkgerät, insbesondere Handy, nach einem der vorausgehenden Ansprüche,
wobei
die erste Komponente im Wesentlichen innerhalb des ersten optisch leitfähigen Körpers und die zweite Komponente im Wesentlichen innerhalb des zweiten optisch leitfähigen Körpers angeordnet ist.

8. Mobilfunkgerät, insbesondere Handy, nach einem der vorausgehenden Ansprüche,
wobei
die erste Komponente eine Signaleingabeeinrichtung und die zweite Komponente eine Signalausgabeeinrichtung aufweist.

9. Mobilfunkgerät, insbesondere Handy, nach einem der vorausgehenden Ansprüche,
wobei
weitere optisch leitfähige Körper an das Bussystem gekoppelt sind und die optisch leitfähigen Körper ein oder mehrere lichtemittierende und/oder lichtempfangende Elemente aufweisen.

10. Mobilfunkgerät, insbesondere Handy, nach einem der vorausgehenden Ansprüche,
wobei
die Schnittstellen des Bussystems zum Ein- und/oder Auskoppeln von optischen Signalen im Inneren oder an der äußeren Oberfläche der optisch leitfähigen Körper befindlich sind.

11. Mobilfunkgerät, insbesondere Handy,nach einem der vorausgehenden Ansprüche,
wobei
die optisch leitfähigen Körper aus einem Material gebildet sind, welches Licht, insbesondere im Infrarotbereich, im sichtbaren Bereich oder im Ultraviolettbereich leitet.

12. Mobilfunkgerät, insbesondere Handy, nach einem der vorausgehenden Ansprüche,
wobei
zur bidirektionalen Übertragung von optischen Signalen die jeweilige Komponente sowohl mit einem optoelektronischen Bauelement zum Umwandeln von elektrischen Signalen in optische Signale als auch mit einem optoelektronischen Bauelement zum Umwandeln von optischen Signalen in elektrische Signale ausgestattet ist.

13. Mobilfunkgerät, insbesondere Handy, nach einem der vorausgehenden Ansprüche,
wobei
das optische Bussystem derart ausgebildet ist, dass als optische Signale einerseits Daten, andererseits auch Energie übertragbar sind.

14. Mobilfunkgerät, insbesondere Handy, nach einem der vorausgehenden Ansprüche,
wobei
zur Energieversorgung der Komponenten mit Hilfe des Bussystems eine Solarzelle vorgesehen ist, welche einen Teil der im Bussystem durch die übertragenen optischen Signale befindliche Energie in einen Betriebsstrom umwandelt.

## Claims

1. Mobile radio device, in particular a mobile telephone, having a first component which is coupled to at least one first optically-conductive body and comprises one or several light-emitting and/or light-receiving elements, and
a second component, which is coupled to at least one second optically-conductive body and comprises one or several light-emitting and/or light-receiving elements,
with the first and the second optically-conductive bodies being arranged or layered one on top of the other by forming a bus system for transmitting optical signals, such that these can be moved relatively in respect of each other and are optically connected to one another,
with the respective optically-conductive body of the bus system comprising a plurality of interfaces for coupling in and/or coupling out optical signals, with the structure of the respective optically-conductive body being provided such that an optical signal coupled to an interface can be coupled out from any other interface irrespective of its position, with the first component being provided in the upper shell and the second component being provided in the lower shell of the mobile radio device, and with the upper and the lower shell only being linked with one another by means of a guiding device, which permits a relative movement of the lower shell in respect of the upper shell.

2. Mobile radio device, in particular mobile telephone, according to claim 1,
with
the guiding device being configured such that a displacement, rotation or folding of the upper and lower shells in respect of one another is enabled.

3. Mobile radio device, in particular mobile telephone, according to one of the preceding claims,
with
the bus system being formed by two cuboid-shaped bodies, which are moulded from an optically-conductive material and form the lower and upper shell of the mobile radio device.

4. Mobile radio device, in particular mobile telephone, according to one of the preceding claims,
with
the first component comprising a keyboard and a microphone.

5. Mobile radio device, in particular mobile telephone, according to one of the preceding claims,
with
the second component comprising a display and an earpiece.

6. Mobile radio device, in particular mobile telephone, according to one of the preceding claims,
with
the first and the second optical bodies being layered or arranged in a moveable fashion one above the other such that they completely overlap in the switch-off state or standby state of the mobile radio devices and partially overlap in the switch-on state.

7. Mobile radio device, in particular mobile telephone, according to one of the preceding claims,
with
the first component essentially being arranged within the first optically-conductive body and the second component essentially being arranged within the second optically-conductive body.

8. Mobile radio device, in particular mobile telephone, according to one of the preceding claims,
with
the first component comprising a signal input device and the second component a signal output device.

9. Mobile radio device, in particular mobile telephone, according to one of the preceding claims,
with
further optically-conductive bodies being coupled to the bus system and the optically-conductive bodies comprising one or several light-emitting and/or light-receiving elements.

10. Mobile radio device, in particular mobile telephone, according to one of the preceding claims,
with
the interfaces of the bus system for the coupling in and/or coupling out of optical signals being positioned in the interior or on the exterior surface of the optically-conductive bodies.

11. Mobile radio device, in particular mobile telephone, according to one of the preceding claims,
with the optically-conductive bodies being made from a material which conducts light, in particular in the infrared range, in the visible range or in the ultraviolet range.

12. Mobile radio device, in particular mobile telephone, according to one of the preceding claims,
with
the respective component being equipped both with an optoelectronic device for converting electrical signals into optical signals and also with an optoelectronic device for converting optical signals into electrical signals for the bidirectional transmission of optical signals.

13. Mobile radio device, in particular mobile telephone, according to one of the preceding claims,
with
the optical bus system being designed such that on the one hand data can be transmitted as optical signals and on the other hand energy can also be transmitted.

14. Mobile radio device, in particular mobile telephone, according to one of the preceding claims,
with
a solar cell being provided for the energy supply of components with the aid of the bus system, which solar cell converts a part of the energy found in the bus system by means of the transmitted optical signal into an operating current.

## Revendications

1. Appareil de radiotéléphonie mobile, notamment téléphone portable, comprenant un premier composant couplé à au moins un premier corps optiquement conducteur et possédant un ou plusieurs éléments émetteurs et/ou récepteurs de lumière et
un deuxième composant couplé à au moins un deuxième corps optiquement conducteur et possédant un ou plusieurs éléments émetteurs et/ou récepteurs de lumière,
le premier et le deuxième corps optiquement conducteurs étant superposés ou disposés en sandwich l'un sur l'autre en formant un système de bus pour la transmission de signaux optiques de manière à être mobiles l'un par rapport à l'autre et à être en contact optique l'un avec l'autre,
le corps optiquement conducteur respectif du système de bus étant pourvu d'une pluralité d'interfaces pour le couplage et/ou découplage de signaux optiques, le corps optiquement conducteur respectif possédant une structure telle qu'un signal optique couplé au niveau d'une interface puisse être découplé au niveau de n'importe quelle autre interface indépendamment de sa position, le premier composant étant prévu dans la coque supérieure et le deuxième composant dans la coque inférieure de l'appareil de radiotéléphonie mobile et les coques supérieure et inférieure étant reliées l'une à l'autre simplement par un dispositif de guidage permettant un mouvement relatif de la coque inférieure par rapport à la coque supérieure.

2. Appareil de radiotéléphonie mobile, notamment téléphone portable, selon la revendication 1, le dispositif de guidage étant exécuté de manière à permettre un déplacement, une torsion ou un pivotement de la coque supérieure et de la coque inférieure l'une par rapport à l'autre.

3. Appareil de radiotéléphonie mobile, notamment téléphone portable, selon l'une des revendications précédentes, le système de bus étant formé par deux corps de forme parallélépipédique coulés dans un matériau optiquement conducteur qui forment la coque inférieure et la coque supérieure de l'appareil de radiotéléphonie mobile.

4. Appareil de radiotéléphonie mobile, notamment téléphone portable, selon l'une des revendications précédentes, le premier composant comprenant un clavier et un microphone.

5. Appareil de radiotéléphonie mobile, notamment téléphone portable, selon l'une des revendications précédentes, le deuxième composant comprenant un écran d'affichage et un écouteur.

6. Appareil de radiotéléphonie mobile, notamment téléphone portable, selon l'une des revendications précédentes, les premier et deuxième corps optiques étant disposés en sandwich ou superposés l'un sur l'autre de manière mobile, de manière à se chevaucher complètement dans l'état de déconnexion et d'attente des appareils de radiotéléphonie mobile et à se chevaucher partiellement dans l'état de connexion des appareils.

7. Appareil de radiotéléphonie mobile, notamment téléphone portable, selon l'une des revendications précédentes, le premier composant étant situé essentiellement à l'intérieur du premier corps optiquement conducteur et le deuxième composant étant situé essentiellement à l'intérieur du deuxième corps optiquement conducteur.

8. Appareil de radiotéléphonie mobile, notamment téléphone portable, selon l'une des revendications précédentes, le premier composant comprenant un dispositif d'entrée de signaux et le deuxième composant comprenant un dispositif de sortie de signaux.

9. Appareil de radiotéléphonie mobile, notamment téléphone portable, selon l'une des revendications précédentes, d'autres corps optiquement conducteurs étant couplés au système de bus et les corps optiquement conducteurs étant pourvu d'un ou plusieurs élément/s émetteur/s et/ou récepteur/s de lumière.

10. Appareil de radiotéléphonie mobile, notamment téléphone portable, selon l'une des revendications précédentes, les interfaces du système de bus pour le couplage et/ou découplage de signaux optiques étant situées à l'intérieur ou sur la surface extérieure des corps optiquement conducteurs.

11. Appareil de radiotéléphonie mobile, notamment téléphone portable, selon l'une des revendications précédentes, les corps optiquement conducteurs étant formés d'un matériau qui conduit la lumière, notamment dans le domaine infrarouge, dans le domaine visible ou dans le domaine ultraviolet.

12. Appareil de radiotéléphonie mobile, notamment téléphone portable, selon l'une des revendications précédentes, le composant respectif étant équipé non seulement d'un dispositif opto-électronique pour la conversion de signaux électriques en signaux optiques mais également d'un dispositif opto-électronique pour la conversion de signaux optiques en signaux électriques, ceci pour assurer la transmission bidirectionnelle de signaux optiques.

13. Appareil de radiotéléphonie mobile, notamment téléphone portable, selon l'une des revendications précédentes, le système de bus optique étant exécuté de manière à pouvoir transmettre, en tant que signaux optiques, d'une part des données, d'autre part de l'énergie également.

14. Appareil de radiotéléphonie mobile, notamment téléphone portable, selon l'une des revendications précédentes, une cellule solaire étant prévue pour l'alimentation en énergie des composants à l'aide du système de bus, laquelle cellule convertit une partie de l'énergie présente dans le système de bus grâce aux signaux optiques transmis en un courant de fonctionnement.
